# EUROPEAN PATENT APPLICATION

(11) **EP 1 443 681 A1**
(43) Date of publication of application: **04.08.2004**
(21) Application number: 02775519.8
(22) Date of filing: 08.11.2002
(51) Int. Cl.: H04B 7/26

(54) **INFORMATION RATE CONTROL METHOD, MOBILE STATION, RADIO CONTROL APPARATUS, BASE STATION, AND MOBILE COMMUNICATION SYSTEM**

(30) Priority: 09.11.2001 JP 2001345231
(71) Applicant: NTT DoCoMo, Inc., Tokyo 100-6150 (JP)
(72) Inventor: MORIHIRO, Yoshifumi, IPD, NTT DoCoMo, Inc., Chiyoda-ku, Tokyo 100-6150 (JP); HAYASHI, Takahiro, IPD, NTT DoCoMo, Inc., Chiyoda-ku, Tokyo 100-6150 (JP); ISHIKAWA, Yoshihiro, IPD, NTT DoCoMo, Inc., Chiyoda-ku, Tokyo 100-6150 (JP)
(74) Representative: GROSSE BOCKHORNI SCHUMACHER
(86) International application number: PCT/JP2002/011696
(87) International publication number: WO 2003/041302

(57) **Abstract**

In order to suppress decrease in the number of receptible mobile stations in an entire mobile communication system due to oppression on the power resource at a base station by simple control without any large change in the scale of apparatus, an information rate control method in a mobile communication system comprising a base station and a mobile station located in a cell established by the base station and configured to implement radio communication between the base station and the mobile station, is provided as follows. The information rate control method has a step for the mobile station to measure a reception quality of a signal from the base station at a start of radio communication (S51); a step of calculating a reference quality as a reference for determination of an information rate in accordance with the reception quality, i.e., setting the reference quality lower as the reception quality becomes lower (S52); a step of determining an information rate corresponding to the reference quality (S53); and a step of notifying the base station of the determined information rate (S54).

## Description

### Technical Field

The present invention relates to a mobile communication system comprising a base station, and a mobile station located in a cell established by the base station, and configured to implement radio communication between the base station and the mobile station; an information rate control method in the system; and a mobile station, a radio control apparatus and a base station forming the system.

### Background Art

In the communication using the currently widespread mobile communication systems like cell phones, communication information rates between base stations and mobile stations largely depend on reception qualities and, among others, on SIR (Signal to Interference Power Ratio). The communication at high information rates requires a highly efficient modulation system and low error rates, and high SIRs must be maintained to achieve the low error rates. In other words, high SIRs are essential to achievement of high information rates, and this results in requiring a large power on the transmitter side.

For example, for carrying out communication at high information rates in transmission from a base station to a mobile station, high SIRs are needed at the mobile station; conversely, the SIRs can be low for communication at low information rates. The same also applies similarly to transmission from a mobile station to a base station.

Transmission power control or the like is used as a technique to satisfy the reception quality necessary for the communication as discussed above (for example, reference is made to Japanese Patent Application Laid-Open Gazette No. Heisei 7-336292). In the mobile communication, radio waves sent from a base station attenuate during propagation through the space while being affected by surrounding topographic features and buildings. If the transmission power is constant at a base station, the reception power of radio waves will heavily vary at a mobile station with migration thereof. The feedback type transmission power control based on the reception quality is used as a technique of keeping the reception quality constant even under such circumstances. Specifically, it is a technique of, in order to keep track of the variation of propagation, measuring the reception quality on the receiver side, comparing it with a target value, feeding the result of the comparison at a sufficiently short period of radio frames, time slots, or the like back to the transmitter side, and adjusting the transmission power on the basis of the reported result on the transmitter side. This transmission power control is effective both in keeping the reception quality constant and in alleviating the variation of reception quality at the site of the mobile station in the service area, minimizing the transmission power, and increasing the efficiency of utilization of power.

The reception quality as a reference for the power control can be one selected from an SIR, a received power (reception level), a signal quality (one of quality criteria using the result of error detection by CRC (Cyclic Redundancy Check), an error rate such as BLER (Block Error Rate), BER (Bit Error Rate), or the like, and others), and so on. Which measurement result is applied is irrelevant to embodied forms of the present invention, but in a state before a start of communication, principal criteria for measurement of the reception quality are reception levels, or signal to noise interference power ratios E_{c}/I₀ of Common Pilot Channel (CPICH) used for identification of each base station.

In the above transmission power control, however, the transmission power needs to be considerably higher, for example, where the mobile station is located in the edge region of the cell than where the mobile station is located in the vicinity of the base station. If data needs to be transmitted at high information rates, the required transmission power will become much higher. On the other hand, each base station has a certain upper limit to available power, and thus the existence of a mobile station necessitating a high information rate and located in the edge region of the cell, i.e., a mobile station requiring a high transmission power will result in bearing down heavily on the power resource on the base station side. This can be a factor of decreasing the number of receptible mobile stations at the base station and thus possibly decrease the efficiency of the entire mobile communication system.

The present invention has been accomplished in order to solve the above problem and an object of the invention is to provide an information rate control method, a mobile communication system, a mobile station, a radio control apparatus, and a base station capable of suppressing the decrease in the number of receptible mobile stations in the entire mobile communication system due to the oppression on the power resource at the base station, by simple control without any large change in the scale of apparatus.

### Disclosure of the Invention

In order to achieve the above object, an information rate control method according to the present invention is an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication one of the mobile station and the base station measures a reception quality of a signal from the other; an information rate setting step wherein the one sets an information rate on the basis of the reception quality obtained in the measurement; and an information rate notification step wherein the one notifies the other of the information rate thus set.

The information rate set in the information rate setting step is assumed to encompass both an information rate of an uplink from the mobile station to the base station and an information rate of a downlink from the base station to the mobile station. For this reason, the present invention involves both the case where the information rate of the downlink is set on the basis of the reception quality of the uplink and the case where the information rate of the uplink is set on the basis of the reception quality of the downlink. These are effective in systems of carrying out uplink and downlink communications in the same frequency band.

The present invention focuses on execution of the above information rate control method at the mobile station. Namely, an aspect of the present invention is an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication the mobile station measures a reception quality of a signal from the base station; an information rate setting step wherein the mobile station sets an information rate on the basis of the reception quality obtained in the measurement; and an information rate notification step wherein the mobile station notifies the base station of the information rate thus set. Normally, there exist a number of mobile stations located in a cell; therefore, the information rate control method should better be executed at each mobile station rather than at the base station, whereby it is feasible to avoid concentration of loads on the base station and increase the efficiency of processing of the entire mobile communication system.

Of course, it is also possible to adopt an embodiment of carrying out the information rate control method at the base station. Namely, another information rate control method according to the present invention is an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication the base station measures a reception quality of a signal from the mobile station; an information rate setting step wherein the base station sets an information rate on the basis of the reception quality obtained in the measurement; and an information rate notification step wherein the base station notifies the mobile station of the information rate thus set.

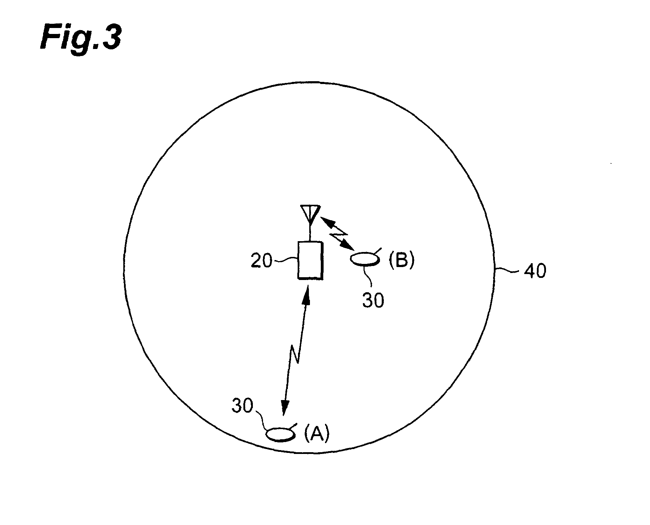

The action of the present invention will be described below with reference to Fig. 3. Let us consider herein cases where a mobile station starts communication at site (A) and at site (B) in Fig. 3.

With the transmission power control being active, if communication is effected at a maximum information rate permitted in the mobile communication system between mobile station 30 at site (A) and base station 20, a high transmission power will be needed at the base station 20 to put the load on the transmission power of the base station 20, because site (A) is located near the edge of cell 40. On the other hand, the reception quality of signal (e.g., a reception level or the like) degrades at the mobile station 30 with distance from the base station 20 in general.

In the present invention, therefore, one of the mobile station and the base station measures the reception quality of the signal from the other at a start of radio communication in the measurement step, then the one sets the information rate on the basis of the reception quality obtained in the measurement, in the information rate setting step, and the one notifies the other of the set information rate in the information rate notifying step. This implements the radio communication at the information rate set based on the reception quality of the signal.

Specifically, the information rate setting step is configured to set the information rate higher as the reception quality becomes higher. Namely, in view of the fact that where the mobile station 30 at site (A) starts communication, the reception quality becomes low between mobile station 30 and base station 20 to raise the need for a large power at base station 20 because of site (A) being located at the edge of cell 40, control is made so as not to perform communication at the maximum information rate permitted in the mobile communication system, but so as to set a lower information rate than it and perform communication at the set information rate. This lowers the transmission power needed at base station 20 for transmission to mobile station 30, as compared with the conventional methods, and circumvents the decrease in the number of receptible mobile stations in the entire mobile communication system due to increase of transmission power.

On the other hand, in the case where the mobile station 30 at site (B) desires to perform communication at the maximum information rate permitted in the mobile communication system, in view of the fact that the reception quality is high between mobile station 30 and base station 20 and that the necessary transmission power is low at the base station 20, control is made so as to set a high information rate and perform communication at the set information rate.

By changing the initial information rate in communication according to the reception quality of the signal at either the mobile station or the base station in this way, it is feasible to prevent the oppression on the power resource at the base station by the simple control without any large change in the scale of apparatus and, as a result, to increase the efficiency of utilization of the power resource at the base station and increase the number of receptible mobile stations in the mobile communication system.

In order to achieve the above object, another information rate control method according to the present invention is an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication one of the mobile station and the base station measures a reception quality of a signal from the other; a quality notification step wherein the one notifies the other or the radio control apparatus of the reception quality obtained in the measurement; an information rate setting step wherein the other or the radio control apparatus sets an information rate on the basis of the reception quality notified of by the one; and an information rate notification step wherein the other or the radio control apparatus notifies the other of the information rate thus set.

Still another information rate control method according to the present invention is an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication the mobile station measures a reception quality of a signal from the base station; a quality notification step wherein the mobile station notifies the base station or the radio control apparatus of the reception quality obtained in the measurement; an information rate setting step wherein the base station or the radio control apparatus sets an information rate on the basis of the reception quality notified of by the mobile station; and an information rate notification step wherein the base station or the radio control apparatus notifies the mobile station of the information rate thus set.

Namely, the mobile station first measures the reception quality of the signal from the base station (the reception quality of a downlink) at a start of radio communication in the measurement step and notifies the base station or the radio control apparatus of the reception quality obtained in the measurement, in the quality notification step. Then the base station or the radio control apparatus sets the information rate on the basis of the reception quality notified of by the mobile station, in the information rate setting step, and then notifies the mobile station of the set information rate in the information rate notification step. This allows the mobile station to obtain the information rate from the base station or the radio control apparatus, by simply measuring the reception quality of the downlink and transferring the measured quality to the base station or the radio control apparatus by an existing configuration. This presents the advantage that a modification or the like in a table of correspondence between qualities and information rates can be substantialized by some change in only the base station or the radio control apparatus, without any change at the mobile station at all.

Of course, it is also possible to adopt an embodiment wherein the base station measures the reception quality of the signal from the mobile station and notifies the mobile station or the radio control apparatus of the result of the measurement and wherein the mobile station or the radio control apparatus sets the information rate on the basis of the result of the measurement of the reception quality and notifies the base station of the information rate. Namely, an information rate control method according to the present invention can be an information rate control method in a mobile communication system comprising a base station, a mobile station located in a cell established by the base station, and a radio control apparatus and configured to implement radio communication between the base station and the mobile station, the information rate control method comprising: a measurement step wherein at a start of radio communication the base station measures a reception quality of a signal from the mobile station; a quality notification step wherein the base station notifies the mobile station or the radio control apparatus of the reception quality obtained in the measurement; an information rate setting step wherein the mobile station or the radio control apparatus sets an information rate on the basis of the reception quality notified of by the base station; and an information rate notification step wherein the mobile station or the radio control apparatus notifies the base station of the information rate thus set.

Incidentally, the information rate setting step can be configured, more specifically, as a procedure of setting the information rate higher as the reception quality becomes higher.

The information rate setting step can be configured, more specifically, as a procedure of setting a reference quality as a reference for setting of the information rate on the basis of the reception quality and setting an information rate corresponding to the reference quality thus set.

The reception quality used can be information of a reception level of a signal, a signal to noise interference power ratio E_{c}/I₀ of Common Pilot Channel (CPICH), or a combination of the reception level with the signal to noise interference power ratio E_{c}/I₀.

The "information rate" according to the present invention is a transmission condition except for a propagation environment or a transmission power; for example, it is a communication quality, a modulation method, an error rate, a code length for correction of the error, or the like.

The invention associated with the above-stated information rate control methods can also be described as the invention associated with the mobile station, radio control apparatus, base station, and mobile communication system below. They are based on substantially the same technical idea and present similar action and effect.

A mobile station according to the present invention is a mobile station located in a cell established by a base station under control of a radio control apparatus and configured to implement radio communication with the base station, the mobile station comprising: measuring means for measuring a reception quality of a signal from the base station at a start of radio communication; information rate setting means for setting an information rate on the basis of the reception quality obtained in the measurement; and information rate notifying means for notifying the base station of the information rate thus set.

Another mobile station according to the present invention is a mobile station located in a cell established by a base station under control of a radio control apparatus and configured to implement radio communication with the base station, the mobile station comprising: measuring means for measuring a reception quality of a signal from the base station at a start of radio communication; and quality notifying means for notifying the base station or the radio control apparatus of the reception quality obtained in the measurement.

Still another mobile station according to the present invention is a mobile station located in a cell established by a base station under control of a radio control apparatus and configured to implement radio communication with the base station, the mobile station comprising: information rate setting means for setting an information rate on the basis of a reception quality obtained in measurement at the base station at a start of radio communication and notified of by the base station; and information rate notifying means for notifying the base station of the information rate thus set.

A radio control apparatus according to the present invention is a radio control apparatus for controlling a base station implementing radio communication with a mobile station located in a cell established by the base station, the radio control apparatus comprising: information rate setting means for setting an information rate on the basis of a reception quality obtained in measurement at the mobile station at a start of radio communication and notified of by the mobile station; and information rate notifying means for notifying the mobile station of the information rate thus set.

Another radio control apparatus according to the present invention is a radio control apparatus for controlling a base station implementing radio communication with a mobile station located in a cell established by the base station, the radio control apparatus comprising: information rate setting means for setting an information rate on the basis of a reception quality obtained in measurement at the base station at a start of radio communication and notified of by the base station; and information rate notifying means for notifying the base station of the information rate thus set.

A base station according to the present invention is a base station configured to implement radio communication with a mobile station located in a cell established by the base station, and being under control of a radio control apparatus, the base station comprising: measuring means for measuring a reception quality of a signal from the mobile station at a start of radio communication; information rate setting means for setting an information rate on the basis of the reception quality obtained in the measurement; and information rate notifying means for notifying the mobile station of the information rate thus set.

Another base station according to the present invention is a base station configured to implement radio communication with a mobile station located in a cell established by the base station, and being under control of a radio control apparatus, the base station comprising: measuring means for measuring a reception quality of a signal from the mobile station at a start of radio communication; and quality notifying means for notifying the mobile station or the radio control apparatus of the reception quality obtained in the measurement.

Still another base station according to the present invention is a base station configured to implement radio communication with a mobile station located in a cell established by the base station, and being under control of a radio control apparatus, the base station comprising: information rate setting means for setting an information rate on the basis of a reception quality obtained in measurement at the mobile station at a start of radio communication and notified of by the mobile station; and information rate notifying means for notifying the mobile station of the information rate thus set.

A mobile communication system according to the present invention is a mobile communication system comprising a base station, a mobile station located in a cell established by the base station, and a radio control apparatus and configured to implement radio communication between the base station and the mobile station, wherein at least one of the mobile station and the base station comprises: measuring means for measuring a reception quality of a signal from the other at a start of radio communication; information rate setting means for setting an information rate on the basis of the reception quality obtained in the measurement; and information rate notifying means for notifying the other of the information rate thus set.

Another mobile communication system according to the present invention is a mobile communication system comprising a base station, a mobile station located in a cell established by the base station, and a radio control apparatus and configured to implement radio communication between the base station and the mobile station, wherein at least one of the mobile station and the base station comprises: measuring means for measuring a reception quality of a signal from the other at a start of radio communication; and quality notifying means for notifying the other or the radio control apparatus of the reception quality obtained in the measurement, and wherein the other or the radio control apparatus comprises: information rate setting means for setting an information rate on the basis of the reception quality notified of by the one; and information rate notifying means for notifying the one of the information rate thus set.

The above object and other features and the advantages of the present invention will become apparent to those skilled in the art in view of the following detailed description with reference to the accompanying drawings.

### Brief Description of the Drawings

Fig. 1 is a whole configuration diagram of a mobile communication system.
Fig. 2A is a diagram showing locations of a base station and mobile stations in a cell in the description of the transmission power control about downlink communication.
Fig. 2B is a graph showing the transmission power to mobile station 30A.
Fig. 2C is a graph showing the transmission power to mobile station 30B.
Fig. 2D is a graph showing the transmission power to mobile station 30C.
Fig. 2E is a graph showing the received signal level at mobile station 30A.
Fig. 2F is a graph showing the received signal level at mobile station 30B.
Fig. 2G is a graph showing the received signal level at mobile station 30C.
Fig. 3 is a diagram for explaining the action of the present invention.
Fig. 4 is a block diagram showing a configuration of the mobile station in the first embodiment.
Fig. 5 is a flowchart showing the operation of the mobile station in the first embodiment.
Fig. 6 is a block diagram showing a configuration of the base station in the second embodiment.
Fig. 7 is a flowchart showing the operation of the base station in the second embodiment.
Fig. 8A is a block diagram showing a configuration of the mobile station in the third embodiment.
Fig. 8B is a block diagram showing a configuration of the base station in the third embodiment.
Fig. 9A is a flowchart showing the operation of the mobile station in the third embodiment.
Fig. 9B is a flowchart showing the operation of the base station in the third embodiment.
Fig. 10 is a block diagram showing a configuration of the radio control apparatus in the fourth embodiment.
Fig. 11A is a flowchart showing the operation of the mobile station in the fourth embodiment.
Fig. 11B is a flowchart showing the operation of the radio control apparatus in the fourth embodiment.
Fig. 12A is a block diagram showing a configuration of the base station in the fifth embodiment.
Fig. 12B is a block diagram showing a configuration of the mobile station in the fifth embodiment.
Fig. 13A is a flowchart showing the operation of the base station in the fifth embodiment.
Fig. 13B is a flowchart showing the operation of the mobile station in the fifth embodiment.
Fig. 14 is a block diagram showing a configuration of the radio control apparatus and base station in the sixth embodiment.
Fig. 15A is a flowchart showing the operation of the base station in the sixth embodiment.
Fig. 15B is a flowchart showing the operation of the radio control apparatus in the sixth embodiment.

### Best Mode for Carrying out the Invention

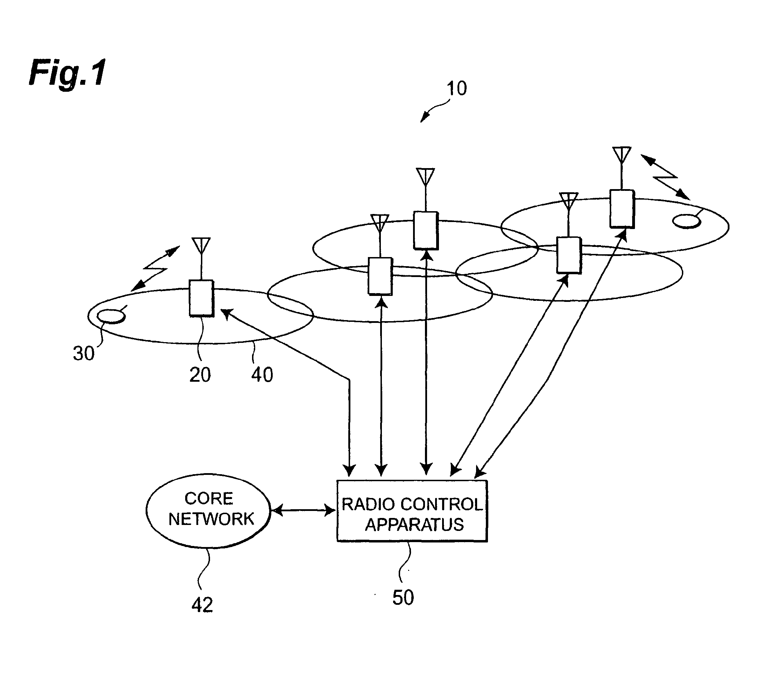

In the currently widespread mobile communication systems like cell phones, services are offered while an entire service area is divided into relatively small radio zones called cells. Namely, as shown in Fig. 1, such mobile communication system 10 is comprised of a plurality of base stations 20 controlling their respective divided cells 40, mobile station 30 configured to set radio channels and perform communication with base station 20, and radio control apparatus 50 connected to core network 42 and configured to control the plurality of base stations 20.

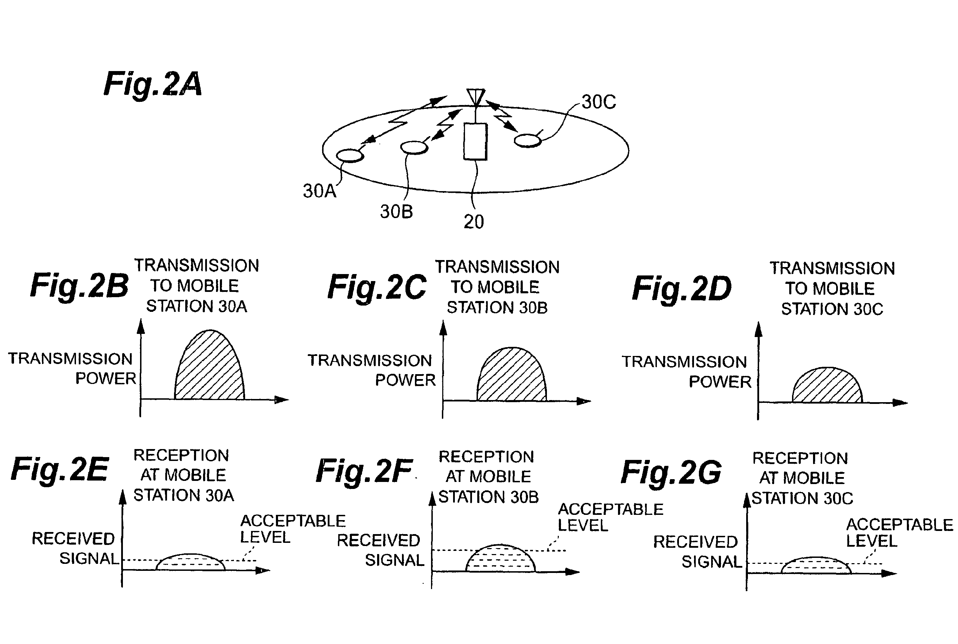

The transmission power control in the mobile communication system 10 as described above will be outlined below as to communication in a downlink from a base station to a mobile station on the basis of Figs. 2A to 2G. When mobile stations 30A, 30C located in the same cell as shown in Fig. 2A perform communication at the same information rate, the transmission power control acts to effect communication to mobile station 30A at a longer distance from the base station 20 by a larger transmission power than communication to mobile station 30C at a shorter distance, as shown in Figs. 2B and 2D. This permits the mobile stations 30A, 30C both to achieve the reception quality at or above a predetermined acceptable level, as shown in Figs. 2E and 2G. In the case of communication to mobile station 30B at the same distance from the base station 20 but at a higher information rate than to the mobile station 30C, transmission is conducted by a larger power than to mobile station 30C, as shown in Figs. 2C and 2D. This permits the mobile stations 30B, 30C both to achieve the reception quality at or above the predetermined acceptable level, as shown in Figs. 2F and 2G. Through this transmission power control, wherever a mobile station is located in the cell, the mobile station can receive signals with the predetermined reception quality required.

The present invention adopts control of the "information rate", that is to say, a transmission condition except for a propagation environment or a transmission power (e.g., a communication quality, a modulation system, an error rate, a code length for correction of the error, or the like) on the basis of the reception quality, instead of the above transmission power control.

Various embodiments of the present invention will be described below in detail with reference to the drawings. The embodiments will be described below in the following order: a mode of providing mobile station 30 in Fig. 1 with a configuration for implementing the control of the initial information rate according to the present invention (first embodiment); a mode of providing base station 20 in Fig. 1 with the configuration (second embodiment); a mode of measuring the reception quality by mobile station 30 and determining the information rate by base station 20 respectively (third embodiment); a mode of measuring the reception quality by mobile station 30 and determining the information rate by radio control apparatus 50 respectively (fourth embodiment); a mode of measuring the reception quality by base station 20 and determining the information rate by mobile station 30 respectively (fifth embodiment); and a mode of measuring the reception quality by base station 20 and determining the information rate by radio control apparatus 50 respectively (sixth embodiment). Since the whole configuration of the mobile communication system in each of the embodiments is much the same as the system of Fig. 1 descried above, the redundant description thereof will be omitted below.

### [First Embodiment]

The first embodiment is the mode of providing the mobile station 30 in Fig. 1 with the configuration for implementing the control of the initial information rate according to the present invention.

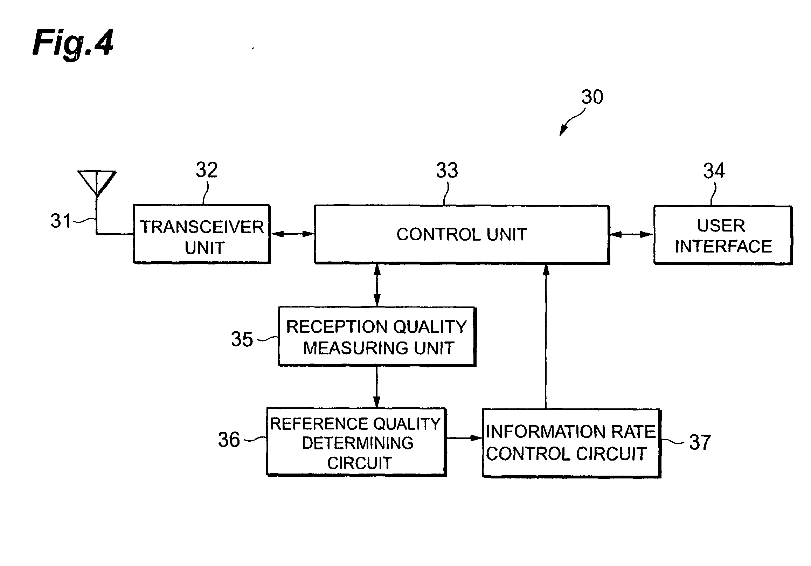

Fig. 4 is a configuration example of mobile station 30 to which the present invention is applied. Fig. 4 conceptually shows parts associated with the present invention in the mobile station. As shown in Fig. 4, mobile station 30 is comprised of transceiver unit 35 with antenna 31, control unit 33, user interface 34, reception quality measuring unit 35, reference quality determining circuit 36, and information rate control circuit 37.

Among these components, the transceiver unit 32 is a device for demodulating a signal transmitted from base station 20 and for coding and modulating information to be transmitted from mobile station 30. The transceiver unit 32 differs depending upon frequency division multiple access, time division multiple access, code division multiple access, etc., but the difference in modulation/demodulation in the radio area does not affect the effect of the present invention at all.

The control unit 33 monitors and controls operations and states of the components of mobile station 30. The user interface 34 is constructed including a user control part such as dial buttons and others and a display part for displaying images, characters, etc., and is connected to the control unit 33. The reception quality measuring unit 35 measures a reception quality of a signal transmitted through a channel at a fixed power from the base station 20 and notifies the reference quality determining circuit 36 of the result of the measurement.

The reference quality determining circuit 36 and the information rate control circuit 37 are devices to be newly added in order to implement the present invention in mobile station 30. The reference quality determining circuit 36 determines a quality as a reference for determination of the information rate (hereinafter referred to as a reference quality), based on the reception quality obtained in the measurement by reception quality measuring unit 35, for example, based on a signal to noise interference power ratio E_{c}/I₀ of CPICH, a signal reception level, or an optional combination thereof. The reference quality determining circuit 36 has a function of determining both an uplink reference quality for determination of an information rate of an uplink from mobile station 30 to base station 20 and a downlink reference quality for determination of an information rate of a downlink from base station 20 to mobile station 30, based on the reception quality of the downlink obtained in the above measurement. Among them, the technique of determining the uplink reference quality on the basis of the reception quality of the downlink and determining the information rate of the uplink corresponding to the uplink reference quality by information rate control circuit 37 described below is effectively applicable to systems of performing uplink and downlink communications in the same frequency band.

The information rate control circuit 37 determines an information rate corresponding to the reference quality determined by the reference quality determining circuit 36, notifies the control unit 33 of the determined information rate, and retains the information rate. When the control unit 33 is notified of the determined information rate, the control unit 33 generates a transmission power control command, sets a transmitting information rate, and transmits the control command through transceiver unit 32 and antenna 31 to base station 20.

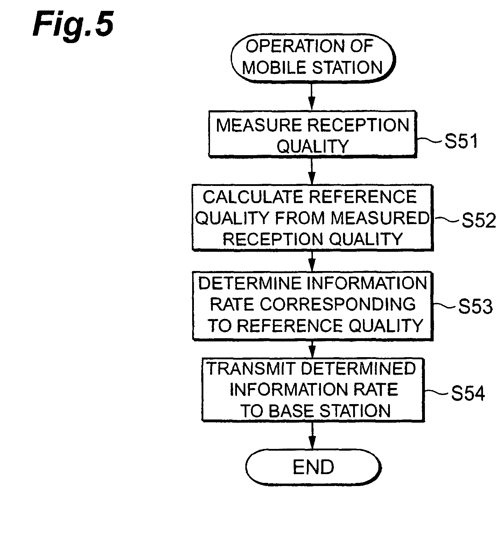

The operation at a start of radio communication according to the present invention, which is carried out by mobile station 30 of the configuration as described above, will be described on the basis of Fig. 5. The description herein concerns an example of determining the information rate of the downlink from base station 20 to mobile station 30. At step S51 in Fig. 5 the reception quality measuring unit 35 first measures a reception quality of a signal from base station 20 received through antenna 31 and transceiver unit 32 (e.g., a signal to noise interference power ratio E_{c}/I₀ of CPICH, a signal reception level, or an optional combination of these) and notifies the reference quality determining circuit 36 of the result of the measurement.

At next step S52, the reference quality determining circuit 36 calculates a reference quality on the basis of a predetermined calculation rule from the reception quality as the result of the measurement and outputs the result of the calculation to the information rate control circuit 37. At next step S53, the information rate control circuit 37 determines an information rate corresponding to the reference quality obtained in the calculation.

At this stage, as described previously, as the reception quality becomes lower, the reference quality is set lower and a lower information rate is determined. Namely, when mobile station 30 starts communication at site (A) in the edge region of cell 40 in Fig. 3, the reception quality is low between mobile station 30 and base station 20 and thus the reference quality is set low; therefore, the information rate is not the maximum information rate permitted in the mobile communication system, but an information rate lower than it. On the other hand, when mobile station 30 starts communication at site (B) in the vicinity of base station 20 in Fig. 3, the reception quality is high between mobile station 30 and base station 20 and thus the reference quality is set high; therefore, the information rate is determined to be a higher information rate.

Then the information rate control circuit 37 notifies the control unit 33 of the determined information rate, and retains the information rate. Furthermore, at step S54 the control unit 33 notifies the base station 20 of the determined information rate through transceiver unit 32 and antenna 31. Specifically, the control unit 33 generates the transmission power control command and sets the transmitting information rate, and then it transmits the control command to the base station 20 through transceiver unit 32 and antenna 31.

The above processing starts executing the radio communication at the information rate set based on the reception quality measured at mobile station 30 as described above, between mobile station 30 and base station 20, whereby it is feasible to keep down the transmission power to mobile station 30 required of the base station 20 and to avoid degradation in the number of receptible mobile stations in the entire mobile communication system due to increase of the transmission power, as compared with the conventional methods. The reception quality used in the setting of the information rate is one that can be measured by the existing configuration for the mobile station, and this provides the effect of minimizing the hardware to be added to the mobile station.

The present invention can also be substantialized without any change in the configuration of the mobile station 30 if the reference quality determining circuit 36 and information rate control circuit 37 are not mounted on the mobile station 30, but on the base station 20. This mode will be described in the second embodiment below.

### [Second Embodiment]

The second embodiment is the mode of providing base station 20 in Fig. 1 with the configuration for implementing the control of the initial information rate according to the present invention.

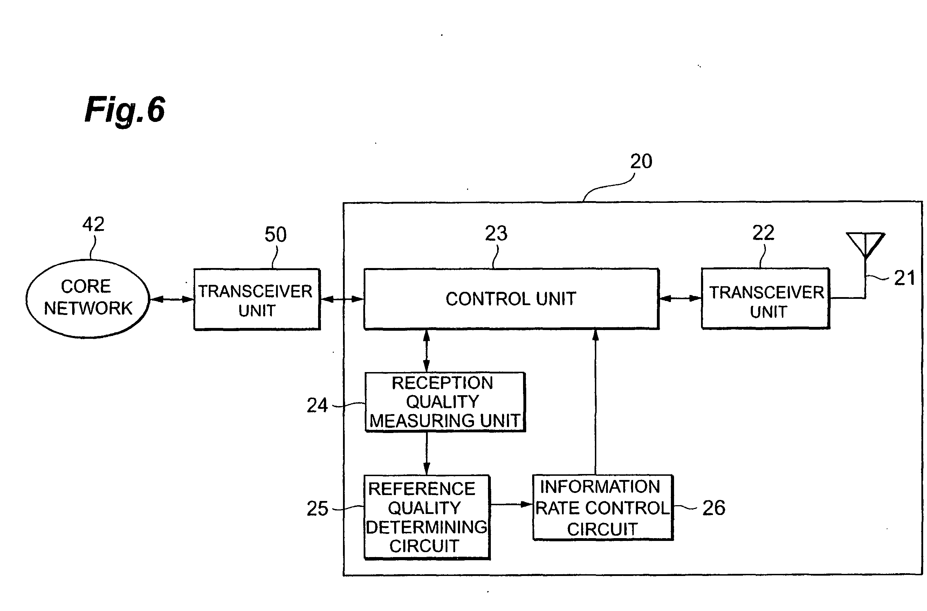

Fig. 6 is a configuration example of base station 20 to which the present invention is applied. Fig. 6 conceptually shows parts associated with the present invention in the base station. As shown in Fig. 6, base station 20 is comprised of transceiver unit 22 with antenna 21, control unit 23, reception quality measuring unit 24, reference quality determining circuit 25, and information rate control circuit 26. The control unit 23 is connected to the radio control apparatus 50 and this radio control apparatus 50 is connected to core network 42.

Among these components, the transceiver unit 22 is a device for demodulating a signal transmitted from mobile station 30 and for coding and modulating information to be transmitted from base station 20. The transceiver unit 22 differs depending upon frequency division multiple access, time division multiple access, code division multiple access, etc., but the difference in modulation/demodulation in the radio area does not affect the effect of the present invention at all.

The control unit 23 monitors and controls operations and states of the components of base station 20, and performs processing of the transmission power control command. The reception quality measuring unit 24 measures a reception quality of a signal transmitted through a channel at a fixed power from the mobile station 30 and notifies the reference quality determining circuit 25 of the result of the measurement.

The reference quality determining circuit 25 and the information rate control circuit 26 are devices to be newly added in order to implement the present invention in base station 20. The reference quality determining circuit 25 determines a reference quality as a reference for determination of the information rate, based on the reception quality obtained in the measurement by reception quality measuring unit 24, for example, based on a signal to noise interference power ratio E_{c}/I₀ of CPICH, a signal reception level, or an optional combination thereof. The reference quality determining circuit 25 has a function of determining both an uplink reference quality for determination of an information rate of an uplink from mobile station 30 to base station 20 and a downlink reference quality for determination of an information rate of a downlink from base station 20 to mobile station 30, based on the reception quality of the uplink obtained in the above measurement. Among them, the technique of determining the downlink reference quality based on the reception quality of the uplink and determining the information rate of the downlink corresponding to the downlink reference quality by information rate control circuit 26 described below is effectively applicable to systems of performing uplink communication and downlink communication in the same frequency band.

The information rate control circuit 26 determines an information rate corresponding to the reference quality determined by the reference quality determining circuit 25, notifies the control unit 23 of the determined information rate, and retains the information rate. When the control unit 23 is notified of the determined information rate, the control unit 23 generates a transmission power control command and sets a transmitting information rate and then the control unit 23 transmits the control command through transceiver unit 22 and antenna 21 to mobile station 30.

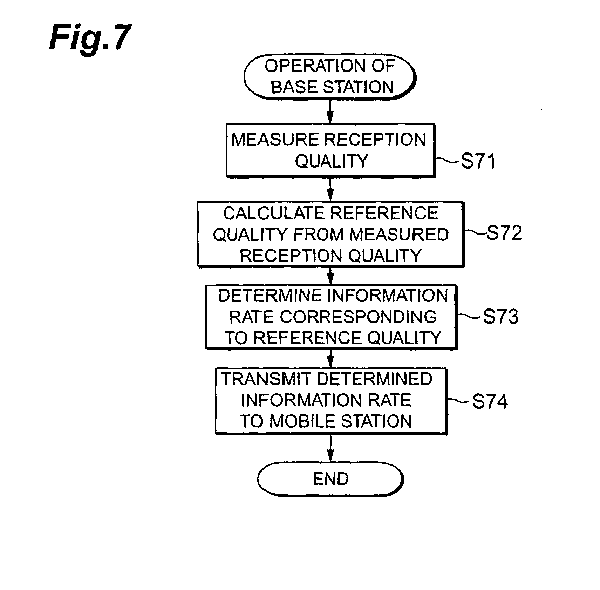

The operation at a start of radio communication according to the present invention, which is carried out by base station 20 of the configuration as described above, will be described on the basis of Fig. 7. The description herein concerns an example of determining the information rate of the uplink from mobile station 30 to base station 20. At step S71 in Fig. 7, the reception quality measuring unit 24 first measures a reception quality of a signal from mobile station 30 received through antenna 21 and transceiver unit 22 (e.g., a signal to noise interference power ratio E_{c}/I₀ of CPICH, a signal reception level, or an optional combination of these) and notifies the reference quality determining circuit 25 of the result of the measurement.

At next step S72, the reference quality determining circuit 25 calculates a reference quality on the basis of the predetermined calculation rule from the reception quality as the result of the measurement and outputs the result of the calculation to the information rate control circuit 26. At next step S73, the information rate control circuit 26 determines an information rate corresponding to the reference quality obtained in the calculation.

At this stage, as described previously, as the reception quality becomes lower, the reference quality is set lower and a lower information rate is determined. Namely, when mobile station 30 starts communication at site (A) in the edge region of cell 40 in Fig. 3, the reception quality is low between mobile station 30 and base station 20 and thus the reference quality is set low; therefore, the information rate is not the maximum information rate permitted in the mobile communication system, but an information rate lower than it. On the other hand, when mobile station 30 starts communication at site (B) in the vicinity of base station 20 in Fig. 3, the reception quality is high between mobile station 30 and base station 20 and thus the reference quality is set high; therefore, the information rate is determined to be a higher information rate.

Then the information rate control circuit 26 notifies the control unit 23 of the determined information rate, and retains the information rate. Furthermore, at step S74 the control unit 23 notifies the mobile station 30 of the determined information rate through transceiver unit 22 and antenna 21. Specifically, the control unit 23 generates a transmission power control command and sets a transmitting information rate, and then the control unit 23 transmits the control command to the mobile station 30 through transceiver unit 22 and antenna 21.

The above processing starts executing the radio communication at the information rate set based on the reception quality measured at base station 20 as described above, between mobile station 30 and base station 20, whereby it is feasible to keep down the transmission power to mobile station 30 required of the base station 20 and to avoid degradation in the number of receptible mobile stations in the entire mobile communication system due to increase of the transmission power, as compared with the conventional methods. The reception quality used in the setting of the information rate is one that can be measured by the existing configuration for the base station 20, and this provides the effect of minimizing the hardware to be added to the base station 20.

### [Third Embodiment]

The third embodiment will describe the mode of measuring the reception quality by the mobile station 30 and determining the information rate by the base station 20 respectively.

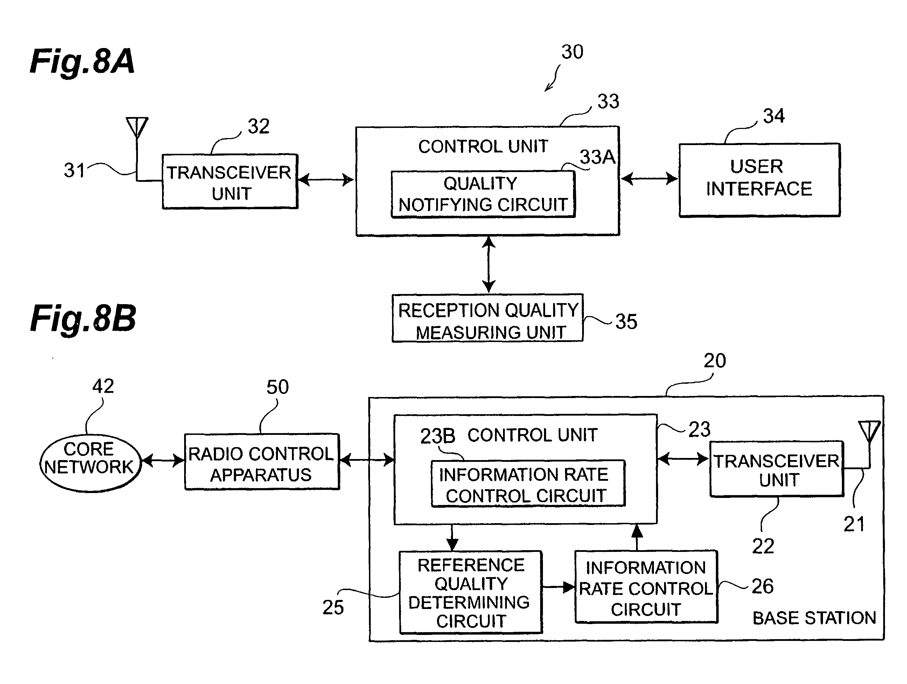

As shown in Fig. 8A, the mobile station 30 in the present embodiment is comprised of transceiver unit 32 with antenna 31, control unit 33, user interface 34, and reception quality measuring unit 35, which were described previously, and the control unit 33 incorporates quality notifying circuit 33A for notifying the base station 20 of the reception quality obtained in the measurement.

As shown in Fig. 8B, the base station 20 in the present embodiment is comprised of transceiver unit 22 with antenna 21, control unit 23, reference quality determining circuit 25, and information rate control circuit 26, which were described previously, and the control unit 23 incorporates information rate notifying circuit 23B for notifying the mobile station 30 of the determined information rate.

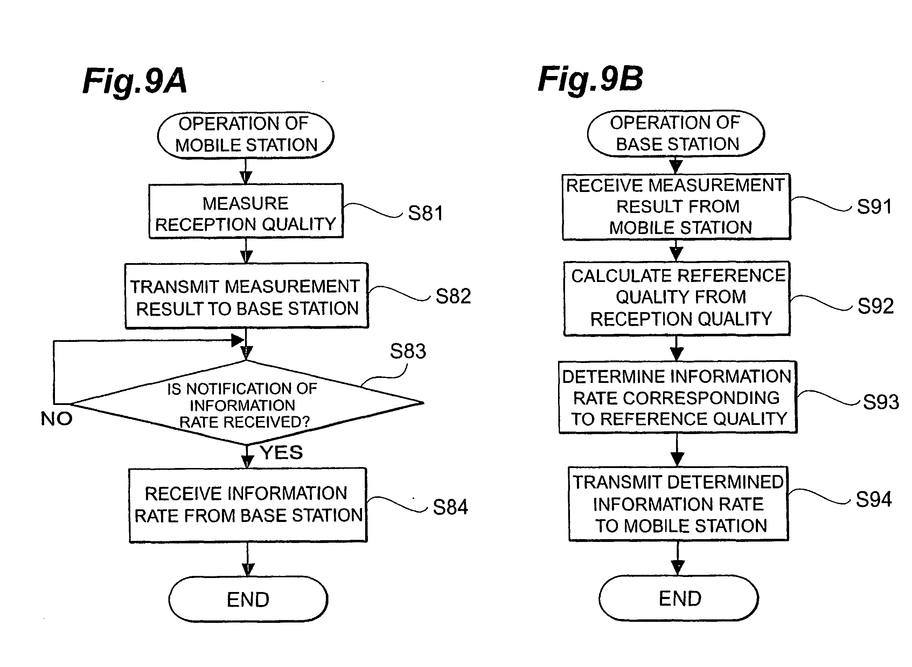

The operation at a start of radio communication in the present embodiment will be described below with reference to Figs. 9A and 9B. At step S81 in Fig. 9A, the reception quality measuring unit 35 of mobile station 30 first measures a reception quality of a signal from base station 20 received through antenna 31 and transceiver unit 32 (e.g., a signal to noise interference power ratio E_{c}/I₀ of CPICH, a signal reception level, or an optional combination of these) and at next step S82, the quality notifying circuit 33A in the control unit 33 notifies the base station 20 of the result of the measurement through transceiver unit 32 and antenna 31. At step S83, the mobile station 30 awaits a notification of an information rate from the base station 20.

The base station 20 starts executing the processing of Fig. 9B when receiving the notification of the measurement result from mobile station 30. First, when base station 20 receives the measurement result from mobile station 30 at step S91, next step S92 is carried out as a step wherein the reference quality determining circuit 25 calculates a reference quality on the basis of the predetermined calculation rule from the reception quality as the measurement result and outputs the result of the calculation to the information rate control circuit 26. At next step S93, the information rate control circuit 26 determines an information rate corresponding to the reference quality obtained in the calculation.

At this stage, as described previously, as the reception quality becomes lower, the reference quality is set lower and a lower information rate is determined. Namely, when mobile station 30 starts communication at site (A) in the edge region of cell 40 in Fig. 3, the reception quality is low between mobile station 30 and base station 20 and thus the reference quality is set low; therefore, the information rate is not the maximum information rate permitted in the mobile communication system, but an information rate lower than it. On the other hand, when mobile station 30 starts communication at site (B) in the vicinity of base station 20 in Fig. 3, the reception quality is high between mobile station 30 and base station 20 and thus the reference quality is set high; therefore, the information rate is determined to be a higher information rate.

Then the information rate control circuit 26 notifies the control unit 23 of the determined information rate, and retains the information rate. Furthermore, at step S94, the information rate notifying circuit 23B in the control unit 23 notifies the mobile station 30 of the determined information rate through transceiver unit 22 and antenna 21. Specifically, the information rate notifying circuit 23B generates a transmission power control command and sets a transmitting information rate, and then the information rate notifying circuit 23B transmits the control command to the mobile station 30 through transceiver unit 22 and antenna 21.

When the mobile station 30 receives the notification of the information rate from the base station 20, the mobile station 30 leaves the notification awaiting state of step S83 in Fig. 9A and moves to step S84 to receive and retain the information rate from base station 20. Thereafter, the radio communication started at the information rate set as described above, between mobile station 30 and base station 20.

As described above, the mobile station 30 is able to obtain the information rate from base station 20, by simply measuring the downlink reception quality and transferring it to the base station 20 by the existing configuration. This presents the advantage that a change in the table of correspondence between qualities and information rates can be implemented by a change only in base station 20, without any change in mobile station 30 at all.

### [Fourth Embodiment]

The fourth embodiment will describe the mode of measuring the reception quality by the mobile station 30 and determining the information rate by the radio control apparatus 50 respectively.

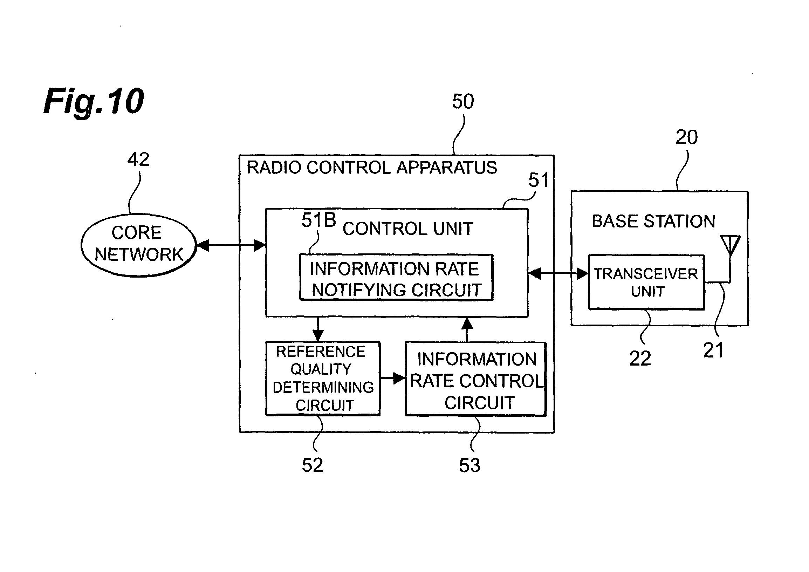

The mobile station 30 in the present embodiment is constructed in much the same configuration as the configuration of Fig. 8A described previously, and, as shown in Fig. 10, the radio control apparatus 50 in the present embodiment is comprised of control unit 51, reference quality determining circuit 52, and information rate control circuit 53, wherein the control unit 51 incorporates information rate notifying circuit 51B for notifying the mobile station 30 of the determined information rate.

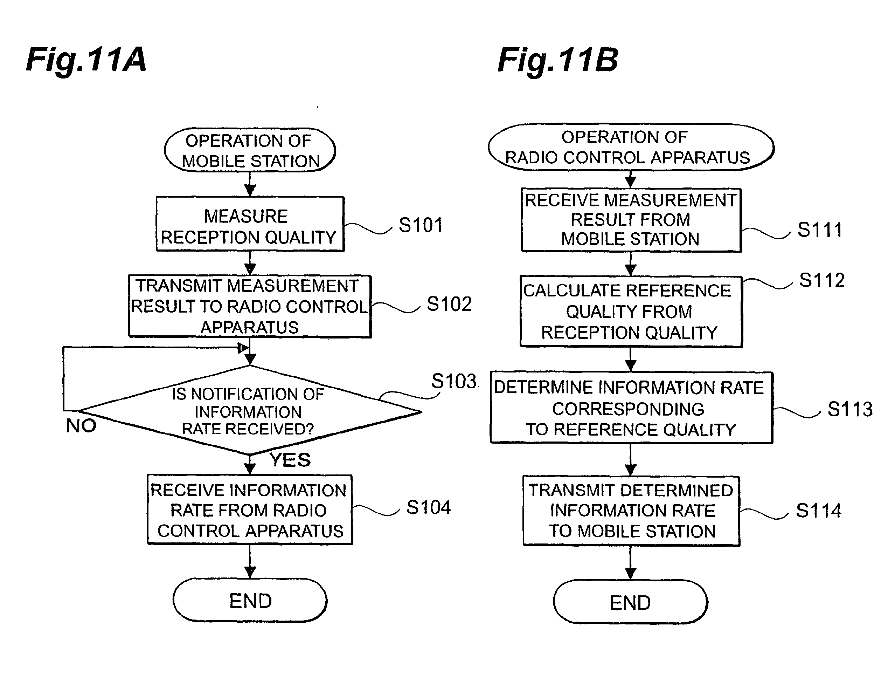

The operation at a start of radio communication in the present embodiment will be described below with reference to Figs. 11A and 11B. At step S101 in Fig. 11A, reception quality measuring unit 35 of mobile station 30 first measures a reception quality of a signal from base station 20 received through antenna 31 and transceiver unit 32 (e.g., a signal to noise interference power ratio E_{c}/I₀ of CPICH, a signal reception level, or an optional combination of these), and at next step S102, the quality notifying circuit 33A in the control unit 33 notifies the radio control apparatus 50 of the above measurement result through the transceiver unit 32 and antenna 31 and through the antenna 21 and transceiver unit 22 of base station 20 in Fig. 10. At step S103, the mobile station 30 then awaits a notification of an information rate from radio control apparatus 50.

The radio control apparatus 50 starts executing the processing of Fig. 11B when receiving the notification of the measurement result from mobile station 30. First, when the radio control apparatus 50 receives the measurement result from mobile station 30 at step S111, next step S112 is carried out as a step wherein the reference quality determining circuit 52 calculates a reference quality on the basis of the predetermined calculation rule from the reception quality as the measurement result and outputs the result of the calculation to the information rate control circuit 53. At next step S113, the information rate control circuit 53 determines an information rate corresponding to the reference quality obtained in the calculation. At this stage, for example as described previously on the basis of Fig. 3, as the reception quality becomes lower, the reference quality is set lower and a lower information rate is determined.

Then the information rate control circuit 53 notifies the control unit 51 of the determined information rate, and retains the information rate. Furthermore, at step S114, the information rate notifying circuit 51B in the control unit 51 notifies the mobile station 30 of the determined information rate through the transceiver unit 22 and antenna 21 of base station 20. Specifically, the information rate notifying circuit 51B generates a transmission power control command and sets a transmitting information rate, and then the information rate notifying circuit 51B transmits the control command to the mobile station 30 through transceiver unit 22 and antenna 21.

When the mobile station 30 receives the notification of the information rate from radio control apparatus 50, the mobile station 30 leaves the notification awaiting state of step S103 in Fig. 11A and moves to step S104 to receive and retain the information rate from radio control apparatus 50. Thereafter, the radio communication started at the information rate set as described above, between mobile station 30, and base station 20 under control of the radio control apparatus 50.

As described above, the mobile station 30 is able to obtain the information rate from radio control apparatus 50, by simply measuring the downlink reception quality and transferring it to the radio control apparatus 50 by the existing configuration. This presents the advantage that a change in the table of correspondence between qualities and information rates can be implemented by a change only in radio control apparatus 50, without any change in mobile station 30 at all.

### [Fifth Embodiment]

The fifth embodiment will describe the mode of measuring the reception quality by the base station 20 and determining the information rate by the mobile station 30 respectively.

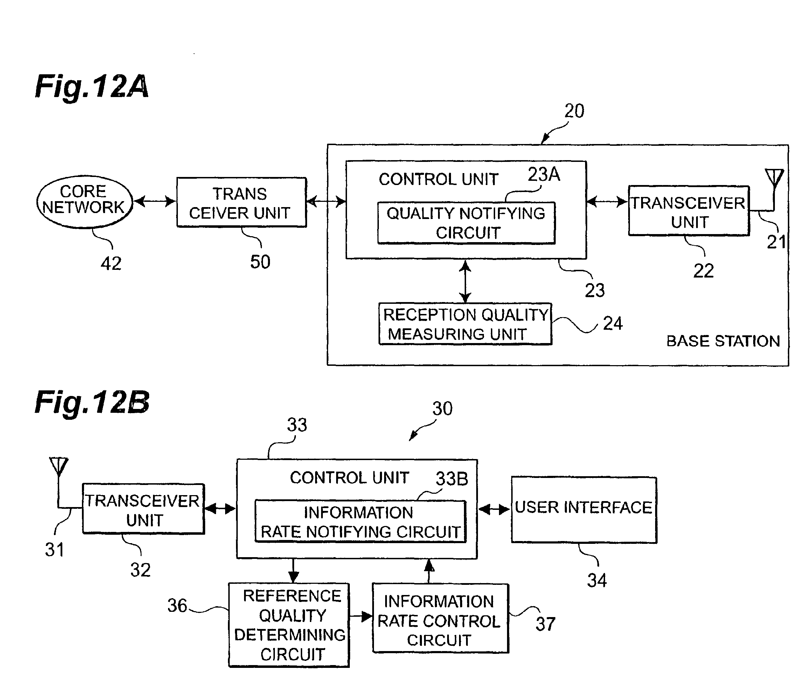

As shown in Fig. 12A, the base station 20 in the present embodiment is comprised of transceiver unit 22 with antenna 21, control unit 23, and reception quality measuring unit 24, which were described previously, and the control unit 23 incorporates quality notifying circuit 23A for notifying the mobile station 30 of the reception quality obtained in the measurement.

As shown in Fig. 12B, the mobile station 30 in the present embodiment is comprised of transceiver unit 32 with antenna 31, control unit 33, user interface 34, reference quality determining circuit 36, and information rate control circuit 37, which were described previously, and the control unit 33 incorporates information rate notifying circuit 33B for notifying the base station 20 of the determined information rate.

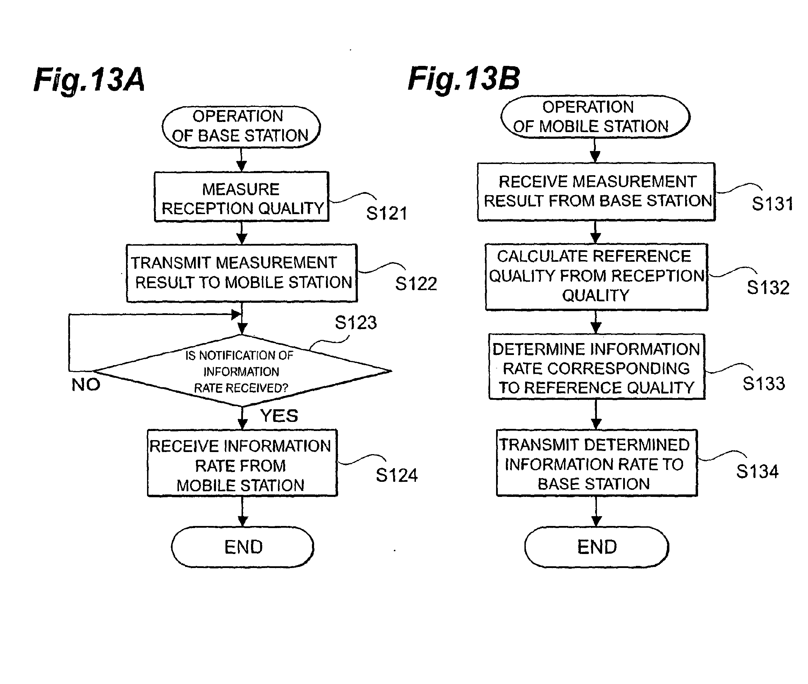

The operation at a start of radio communication in the present embodiment will be described below with reference to Figs. 13A and 13B. At step S121 in Fig. 13A, reception quality measuring unit 24 of base station 20 first measures a reception quality of a signal from mobile station 30 received through antenna 21 and transceiver unit 22 (e.g., a signal to noise interference power ratio E_{c}/I₀ of CPICH, a signal reception level, or an optional combination of these), and at next step S122, the quality notifying circuit 23A in the control unit 23 notifies the mobile station 30 of the result of the measurement through transceiver unit 22 and antenna 21. At step S123, the base station 20 awaits a notification of an information rate from mobile station 30.

The mobile station 30 starts executing the processing of Fig. 13B when receiving the notification of the measurement result from base station 20. First, when the mobile station 30 receives the measurement result from base station 20 at step S131, next step S132 is carried out as a step wherein the reference quality determining circuit 36 calculates a reference quality on the basis of the predetermined calculation rule from the reception quality as the measurement result and outputs the result of the calculation to the information rate control circuit 37. At next step S133, the information rate control circuit 37 determines an information rate corresponding to the reference quality obtained in the calculation. At this stage, for example as described previously on the basis of Fig. 3, as the reception quality becomes lower, the reference quality is set lower and a lower information rate is determined.

Then the information rate control circuit 37 notifies the control unit 33 of the determined information rate, and retains the information rate. Furthermore, at step S134, the information rate notifying circuit 33B in the control unit 33 notifies the base station 20 of the determined information rate through transceiver unit 32 and antenna 31. Specifically, the information rate notifying circuit 33B generates a transmission power control command and sets a transmitting information rate, and then the information rate notifying circuit 33B transmits the control command to the base station 20 through transceiver unit 32 and antenna 31.

When the base station 20 receives the notification of the information rate from mobile station 30, the base station 20 leaves the notification awaiting state of step S123 in Fig. 13A and moves to step S124 to receive and retain the information rate from mobile station 30. Thereafter, the radio communication started at the information rate set as described above, between mobile station 30 and base station 20.

As described above, the base station 20 is able to obtain the information rate from mobile station 30, by simply measuring the uplink reception quality and transferring it to the mobile station 30 by the existing configuration. This presents the advantage that a change in the table of correspondence between qualities and information rates can be implemented by a change only in mobile station 30, without any change in base station 20 at all.

### [Sixth Embodiment]

The sixth embodiment will describe the mode of measuring the reception quality by the base station 20 and determining the information rate by the radio control apparatus 50 respectively.

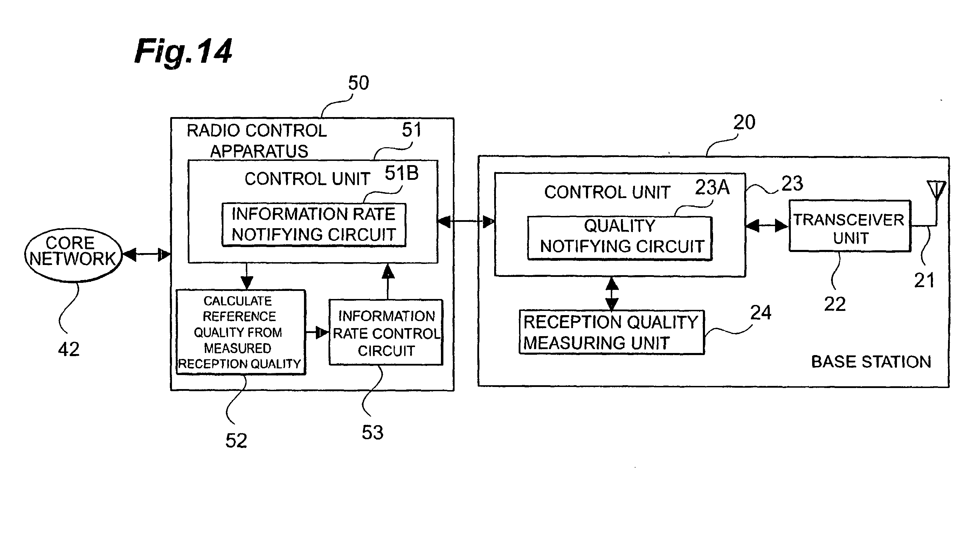

As shown in Fig. 14, the base station 20 in the present embodiment is comprised of transceiver unit 22 with antenna 21, control unit 23, and reception quality measuring unit 24, which were described previously, and the control unit 23 incorporates quality notifying circuit 23A for notifying the radio control apparatus 50 of the reception quality obtained in the measurement.

As shown in the same figure, the radio control apparatus 50 in the present embodiment is comprised of control unit 51, reference quality determining circuit 52, and information rate control circuit 53, and the control unit 51 incorporates information rate notifying circuit 51B for notifying the base station 20 of the determined information rate.

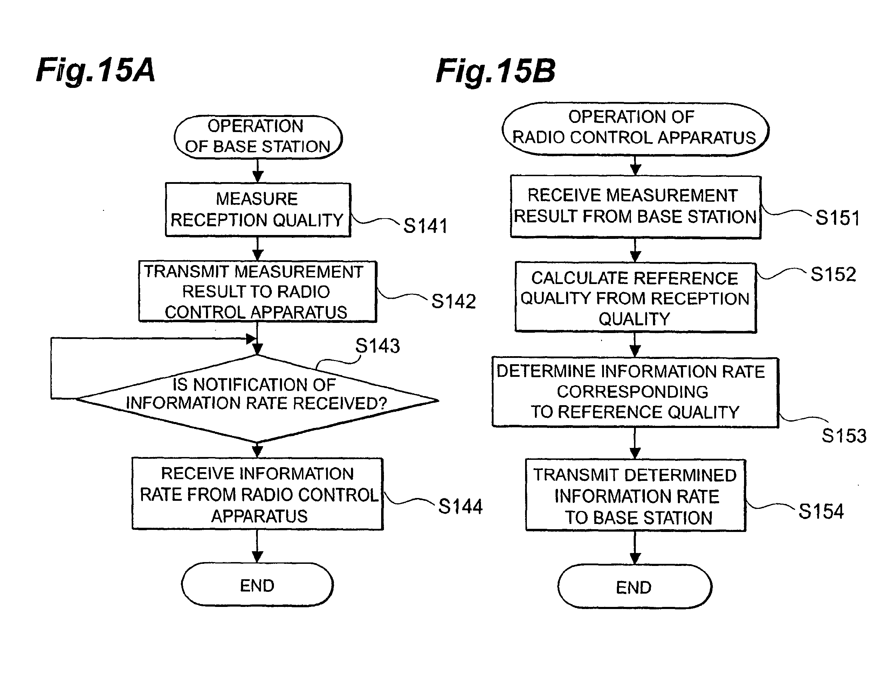

The operation at a start of radio communication in the present embodiment will be described below with reference to Figs. 15A and 15B. At step S141 in Fig. 15A, reception quality measuring unit 24 of base station 20 first measures a reception quality of a signal from mobile station 30 received through antenna 21 and transceiver unit 22 (e.g., a signal to noise interference power ratio E_{c}/I₀ of CPICH, a signal reception level, or an optional combination of these), and at next step S142, the quality notifying circuit 23A in the control unit 23 notifies the radio control apparatus 50 of the above measurement result. At step S143, the base station 20 awaits a notification of an information rate from radio control apparatus 50.

The radio control apparatus 50 starts executing the processing of Fig. 15B when receiving the notification of the measurement result from base station 20. First, when the radio control apparatus 50 receives the measurement result from base station 20 at step S151, next step S152 is carried out as a step wherein the reference quality determining circuit 52 calculates a reference quality on the basis of the predetermined calculation rule from the reception quality as the measurement result and outputs the result of the calculation to the information rate control circuit 53. At next step S153, the information rate control circuit 53 determines an information rate corresponding to the reference quality obtained in the calculation. At this stage, for example as described previously on the basis of Fig. 3, as the reception quality becomes lower, the reference quality is set lower and a lower information rate is determined.

Then the information rate control circuit 53 notifies the control unit 51 of the determined information rate, and retains the information rate. Furthermore, at step S154, the information rate notifying circuit 51B in the control unit 51 notifies the base station 20 of the determined information rate. Specifically, the information rate notifying circuit 51B generates a transmission power control command and sets a transmitting information rate, and then the information rate notifying circuit 51B transmits the control command to the base station 20.

When the base station 20 receives the notification of the information rate from radio control apparatus 50, the base station 20 leaves the notification awaiting state of step S143 in Fig. 15A and moves to step S144 to receive and retain the information rate from radio control apparatus 50. Thereafter, the radio communication started at the information rate set as described above, between the base station 20 under control of the radio control apparatus 50, and the mobile station 30.

As described above, the base station 20 is able to obtain the information rate from radio control apparatus 50, by simply measuring the uplink reception quality and transferring it to the radio control apparatus 50 by the existing configuration. This presents the advantage that a change in the table of correspondence between qualities and information rates can be implemented by a change only in radio control apparatus 50, without any change in base station 20 at all.

For implementing the present invention, the configuration for carrying out the measurement of the reception quality may be provided in both the mobile station 30 and the base station 20, and the configuration for determining the information rate may be provided in two or more of the mobile station 30, the base station 20 and the radio control apparatus 50.

### Industrial Applicability

As described above, the present invention provides the effect of suppressing the degradation in the number of receptible mobile stations in the entire system due to the oppression on the power resource at the base station, by the control of the initial information rate at a new connection on the basis of the quality information. Since the reception quality used in the setting of information rate can be measured by the existing configuration for the mobile station or the base station, the present invention also provides the effect of minimizing the hardware to be added for implementation of the present invention.

## Claims

1. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication one of the mobile station and the base station measures a reception quality of a signal from the other;
an information rate setting step wherein said one sets an information rate on the basis of the reception quality obtained in the measurement; and
an information rate notification step wherein said one notifies the other of the information rate thus set.

2. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication the mobile station measures a reception quality of a signal from the base station;
an information rate setting step wherein the mobile station sets an information rate on the basis of the reception quality obtained in the measurement; and
an information rate notification step wherein the mobile station notifies the base station of the information rate thus set.

3. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication the base station measures a reception quality of a signal from the mobile station;
an information rate setting step wherein the base station sets an information rate on the basis of the reception quality obtained in the measurement; and
an information rate notification step wherein the base station notifies the mobile station of the information rate thus set.

4. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication one of the mobile station and the base station measures a reception quality of a signal from the other;
a quality notification step wherein said one notifies the other or the radio control apparatus of the reception quality obtained in the measurement;
an information rate setting step wherein the other or the radio control apparatus sets an information rate on the basis of the reception quality notified of by said one; and
an information rate notification step wherein the other or the radio control apparatus notifies the other of the information rate thus set.

5. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication the mobile station measures a reception quality of a signal from the base station;
a quality notification step wherein the mobile station notifies the base station or the radio control apparatus of the reception quality obtained in the measurement;
an information rate setting step wherein the base station or the radio control apparatus sets an information rate on the basis of the reception quality notified of by the mobile station; and
an information rate notification step wherein the base station or the radio control apparatus notifies the mobile station of the information rate thus set.

6. An information rate control method in a mobile communication system comprising a base station, a mobile station located in a cell established by the base station, and a radio control apparatus and configured to implement radio communication between the base station and the mobile station, the information rate control method comprising:
a measurement step wherein at a start of radio communication the base station measures a reception quality of a signal from the mobile station;
a quality notification step wherein the base station notifies the mobile station or the radio control apparatus of the reception quality obtained in the measurement;
an information rate setting step wherein the mobile station or the radio control apparatus sets an information rate on the basis of the reception quality notified of by the base station; and
an information rate notification step wherein the mobile station or the radio control apparatus notifies the base station of the information rate thus set.

7. The information rate control method according to one of Claims 1 to 6, wherein in the information rate setting step the information rate is set higher as the reception quality becomes higher.

8. The information rate control method according to one of Claims 1 to 6, wherein in the information rate setting step,
a reference quality as a reference for setting of the information rate is set on the basis of the reception quality, and
an information rate corresponding to the set reference quality is set.

9. The information rate control method according to one of Claims 1 to 8, wherein the reception quality used is information of a reception level of a signal, a signal to noise interference power ratio of a common pilot signal, or a combination of the reception level with the signal to noise interference power ratio.

10. The information rate control method according to one of Claims 1 to 9, wherein the information rate is a transmission condition except for a propagation environment or a transmission power.

11. A mobile station located in a cell established by a base station under control of a radio control apparatus and configured to implement radio communication with the base station, the mobile station comprising:
measuring means for measuring a reception quality of a signal from the base station at a start of radio communication;
information rate setting means for setting an information rate on the basis of the reception quality obtained in the measurement; and
information rate notifying means for notifying the base station of the information rate thus set.

12. A mobile station located in a cell established by a base station under control of a radio control apparatus and configured to implement radio communication with the base station, the mobile station comprising:
measuring means for measuring a reception quality of a signal from the base station at a start of radio communication; and
quality notifying means for notifying the base station or the radio control apparatus of the reception quality obtained in the measurement.

13. A mobile station located in a cell established by a base station under control of a radio control apparatus and configured to implement radio communication with the base station, the mobile station comprising:
information rate setting means for setting an information rate on the basis of a reception quality obtained in measurement at the base station at a start of radio communication and notified of by the base station; and
information rate notifying means for notifying the base station of the information rate thus set.

14. A radio control apparatus for controlling a base station implementing radio communication with a mobile station located in a cell established by the base station, the radio control apparatus comprising:
information rate setting means for setting an information rate on the basis of a reception quality obtained in measurement at the mobile station at a start of radio communication and notified of by the mobile station; and
information rate notifying means for notifying the mobile station of the information rate thus set.

15. A radio control apparatus for controlling a base station implementing radio communication with a mobile station located in a cell established by the base station, the radio control apparatus comprising:
information rate setting means for setting an information rate on the basis of a reception quality obtained in measurement at the base station at a start of radio communication and notified of by the base station; and
information rate notifying means for notifying the base station of the information rate thus set.

16. A base station configured to implement radio communication with a mobile station located in a cell established by the base station, and being under control of a radio control apparatus, the base station comprising:
measuring means for measuring a reception quality of a signal from the mobile station at a start of radio communication;
information rate setting means for setting an information rate on the basis of the reception quality obtained in the measurement; and
information rate notifying means for notifying the mobile station of the information rate thus set.

17. A base station configured to implement radio communication with a mobile station located in a cell established by the base station, and being under control of a radio control apparatus, the base station comprising:
measuring means for measuring a reception quality of a signal from the mobile station at a start of radio communication; and
quality notifying means for notifying the mobile station or the radio control apparatus of the reception quality obtained in the measurement.

18. A base station configured to implement radio communication with a mobile station located in a cell established by the base station, and being under control of a radio control apparatus, the base station comprising:
information rate setting means for setting an information rate on the basis of a reception quality obtained in measurement at the mobile station at a start of radio communication and notified of by the mobile station; and
information rate notifying means for notifying the mobile station of the information rate thus set.

19. A mobile communication system comprising a base station, a mobile station located in a cell established by the base station, and a radio control apparatus and configured to implement radio communication between the base station and the mobile station,
wherein at least one of the mobile station and the base station comprises:
measuring means for measuring a reception quality of a signal from the other at a start of radio communication;
information rate setting means for setting an information rate on the basis of the reception quality obtained in the measurement; and
information rate notifying means for notifying the other of the information rate thus set.

20. A mobile communication system comprising a base station, a mobile station located in a cell established by the base station, and a radio control apparatus and configured to implement radio communication between the base station and the mobile station,
wherein at least one of the mobile station and the base station comprises:
measuring means for measuring a reception quality of a signal from the other at a start of radio communication; and
quality notifying means for notifying the other or the radio control apparatus of the reception quality obtained in the measurement, and
wherein the other or the radio control apparatus comprises:
information rate setting means for setting an information rate on the basis of the reception quality notified of by said one; and
information rate notifying means for notifying said one of the information rate thus set.
